# FASCICULE DE BREVET EUROPEEN

(11) **EP 2 621 708 B1**
(45) Date de publication et mention de la délivrance du brevet: **05.11.2014**
(21) Numéro de dépôt: 11779755.5
(22) Date de dépôt: 28.09.2011
(51) Int. Cl.: B29C 51/16, B29C 51/04, B29C 51/22, B29C 51/30, B29C 51/42

(54) **PROCEDE ET INSTALLATION DE THERMOFORMAGE.**
VERFAHREN UND VORRICHTUNG ZUM WARMUMFORMEN
METHOD AND APPARATUS FOR THERMOFORMING

(30) Priorité: 30.09.2010 FR 1057925
(43) Date de publication de la demande: 07.08.2013
(73) Titulaire: ERCA, 91940 Les Ulis (FR)
(72) Inventeur: LUC, Michel, Maurice, F-92290 Chatenay Malabry (FR)
(74) Mandataire: Calvo de Nó, Rodrigo
(86) Numéro de dépôt international: PCT/FR2011/052267
(87) Numéro de publication internationale: WO 2012/042173

(56) Documents cités:
- EP-A1- 0 296 302
- FR-A1- 2 528 349
- FR-A1- 2 858 263
- FR-A1- 2 876 620

## Description

La présente invention concerne un procédé de fabrication de récipients par thermoformage, en particulier de récipients avec une banderole de décor.

Un procédé de ce type est décrit dans le brevet FR2528349.

Le procédé comporte les étapes suivantes :
introduction d'une banderole de décor dans une chambre de thermoformage d'un bloc de moule, en butée contre au moins un épaulement initialement présent dans la chambre de thermoformage dans une position de réception de la banderole de décor ;
formage d'une préforme thermoplastique chaude par un piston pénétrant dans la chambre de thermoformage ; et
soufflage de la préforme contre une surface interne de la chambre de thermoformage.

Un procédé de ce type est décrit dans le brevet français 2 858 263. Toutefois, ce procédé de l'art antérieur présente l'inconvénient de résulter en un récipient présentant aussi un épaulement correspondant à l'épaulement initialement présent dans la chambre de thermoformage pour faire butée à la banderole de décor lors de son introduction. L'épaulement dans le récipient le fragilise et réduit sa résistance à la compression verticale. En outre, il peut être esthétiquement désirable de produire un récipient aux parois lisses.

La présente invention vise à remédier à ces inconvénients.

Dans au moins un mode de mise en oeuvre de la présente invention, ce but est atteint grâce au fait que ledit épaulement initialement présent dans la chambre de thermoformage est escamoté avant la fin de l'étape de soufflage. Ainsi, la surface interne de la chambre de thermoformage pourra être sensiblement lisse et libre d'épaulements en fin de soufflage, le matériau thermoplastique de la préforme épousant cette surface interne pour produire un récipient sans épaulements.

Une même ouverture, au droit de l'au moins un épaulement dans sa position de réception de la banderole de décor, peut avantageusement servir à introduire la banderole de décor et à faire pénétrer le piston dans la chambre de thermoformage.

Ledit épaulement est avantageusement escamoté par déplacement d'au moins une pièce mobile comportant une partie de ladite surface interne de la chambre de thermoformage. De cette manière, dans la position de thermoformage, cette partie de la surface interne portée par la pièce mobile peut entrer en registre avec le reste de la surface intérieure.

Ladite pièce mobile est plus avantageusement déplacée dans une direction sensiblement transversale à un axe de pénétration du piston dans la chambre de thermoformage. Ainsi, l'épaulement peut servir de surface de guidage à ce déplacement pendant son escamotage.

Ladite pièce mobile forme avantageusement au moins une partie du fond de la chambre de thermoformage. Cette configuration permet d'arranger des dispositifs d'entraînement de la pièce mobile sous la chambre de thermoformage, sans que leur encombrement pose en soi un problème.

Avantageusement, lors de ladite étape d'introduction, ladite banderole est mise en butée contre au moins un premier et un deuxième épaulement dans la chambre de thermoformage, ledit premier épaulement étant escamoté avant la fin de l'étape de soufflage par déplacement d'une première pièce mobile comportant une première partie de la surface interne de la chambre de thermoformage dans une première direction de déplacement, et ledit deuxième épaulement étant escamoté avant la fin de l'étape de soufflage par déplacement d'une deuxième pièce mobile comportant une deuxième partie de la surface interne de la chambre de thermoformage dans une deuxième direction sensiblement opposée à ladite première direction de déplacement. Avec au moins deux épaulements escamotables chacun dans un sens, cette configuration permet de soutenir la banderole de décor de manière équilibrée, tout en limitant le nombre de surfaces de frottement et joints dans la surface interne de la chambre de thermoformage.

Le bloc de moule comporte avantageusement une pluralité de chambres de thermoformage, ce qui permet d'augmenter la cadence de production en formant une pluralité de récipients en parallèle.

Des épaulements dans au moins une première et une deuxième desdites chambres de thermoformage sont avantageusement escamotés par déplacement d'une même pièce mobile comportant une partie de la surface interne de la première chambre de thermoformage et une partie de la surface interne de la deuxième chambre de thermoformage, évitant ainsi de multiplier le nombre de pièces mobiles avec le nombre de chambres de thermoformage.

Le procédé comporte avantageusement une étape de basculement du bloc de moule entre l'étape d'introduction de la banderole et l'étape de formage. Le bloc de moule peut ainsi recevoir la banderole dans une première orientation, et le piston de thermoformage dans une deuxième orientation, ce qui permet de réduire l'encombrement du dispositif de thermoformage tout en augmentant la cadence de production, en particulier si le dispositif comporte plusieurs blocs de moule se relevant aux différentes orientations, pour effectuer simultanément l'introduction de la banderole dans un premier bloc de moule et le thermoformage d'un récipient dans un deuxième bloc de moule. Plusieurs modes de mise en oeuvre de tels blocs de moule basculants ont été décrits dans la demande internationale de brevet WO 2006/051237.

La préforme forme avantageusement partie d'une bande thermoplastique, ce qui facilite l'approvisionnement de l'appareil de thermoformage par défilement de cette bande.

Le procédé comporte encore plus avantageusement, après l'étape de soufflage, une étape de démoulage du récipient mettant en oeuvre un basculement du moule et un défilement simultané de la bande thermoplastique, ce qui permet d'augmenter encore la cadence de production. Ce basculement peut être accompagné par un retrait du bloc de moule dans la direction de l'axe A, en particulier, si le moule est placé en dessous de la bande thermoplastique, par une descente du bloc de moule. Toutefois, d'autres méthodes de démoulage, comme par exemple par simple retrait du bloc de moule dans la direction de l'axe A, peuvent également être envisagées.

L'invention concerne également une installation pour la fabrication de récipients par thermoformage comportant :
un bloc de moule présentant au moins une chambre de thermoformage apte à recevoir une préforme thermoplastique, avec une ouverture et au moins un épaulement face à ladite ouverture pour faire butée à une banderole de décor introduite dans la chambre de thermoformage ;
un dispositif de chauffage de la préforme thermoplastique ;
un piston de formage de la préforme thermoplastique apte à pénétrer, par l'ouverture, dans la chambre de thermoformage ; et
un dispositif pneumatique de soufflage de la préforme thermoplastique contre une surface interne de l'au moins une chambre de thermoformage.

Selon au moins un mode de réalisation de l'invention ledit épaulement est escamotable, permettant ainsi le thermoformage de récipients sans épaulements, et donc plus solides et esthétiquement plus plaisants.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 une vue schématique d'une installation pouvant mettre en oeuvre un mode de réalisation du procédé et du dispositif selon l'invention ;
- la figure 2 est une coupe longitudinale d'une chambre de thermoformage lors de l'étape d'introduction d'une banderole de décor dans un procédé de thermoformage suivant un mode de réalisation de l'invention ;

- la figure 3 est une coupe longitudinale de la même chambre lors de l'étape, subséquente dans ce procédé, de formage par un piston ;

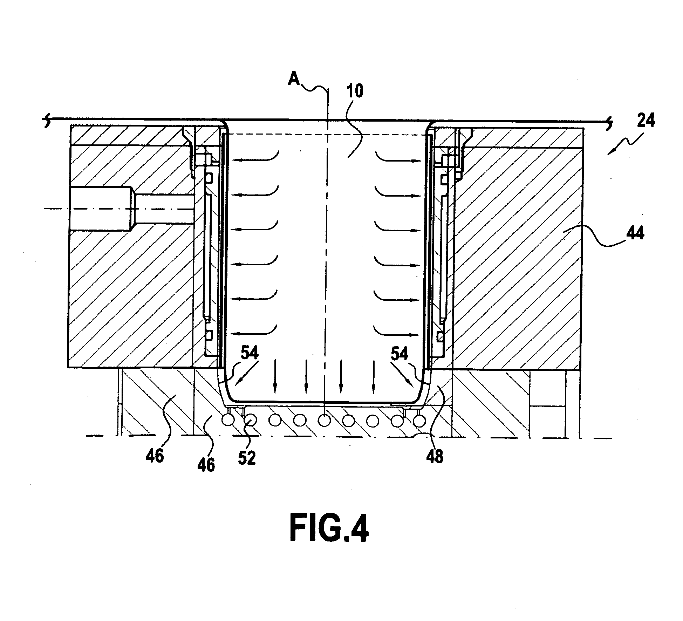

- la figure 4 est une coupe longitudinale de la même chambre lors de l'étape, subséquente dans ce procédé, de soufflage ;
- la figure 5 est une vue en perspective partiellement éclatée d'un bloc de moule d'un dispositif de thermoformage suivant un mode de réalisation de l'invention, dans sa position de réception de banderole ;
- la figure 6 est une vue du haut du même bloc de moule ;
- la figure 7 est une coupe du même bloc de moule suivant la ligne VII-VII de la figure 6 ;
- la figure 8 est une coupe du même bloc de moule suivant la ligne VIII-VIII de la figure 7 ;
- la figure 9 est une vue en perspective partiellement éclatée d'un bloc de moule d'un dispositif de thermoformage suivant un mode de réalisation de l'invention, dans sa position de thermoformage ;
- la figure 10 est une vue du haut du même bloc de moule ;
- la figure 11 est une coupe du même bloc de moule suivant la ligne XI-XI de la figure 10 ; et
- la figure 12 est une coupe du même bloc de moule suivant la ligne XII-XII de la figure 11.

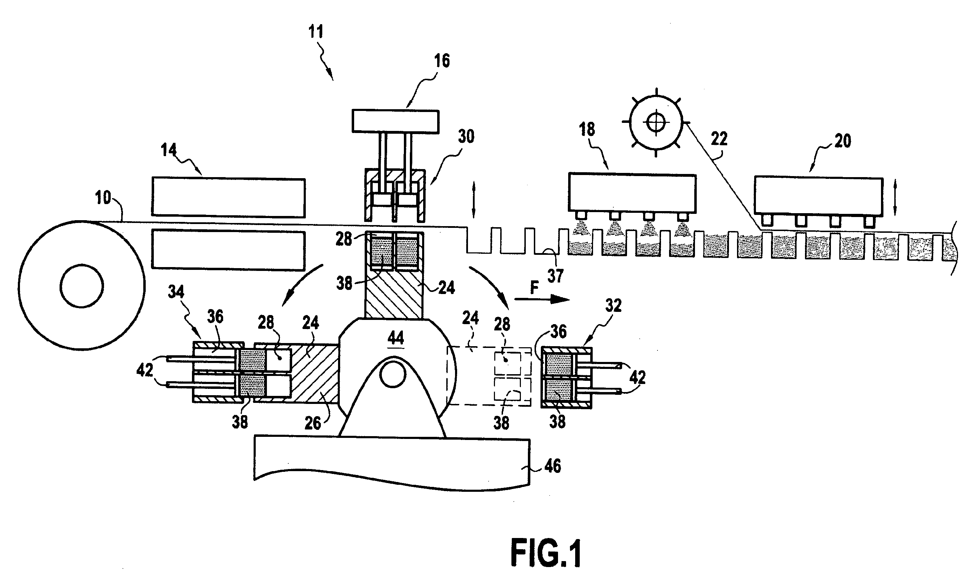

L'installation représentée sur la figure 1 met en oeuvre le procédé objet de l'invention dans son premier mode de mise en oeuvre. Elle comprend plusieurs stations au travers desquelles est entraînée pas à pas une bande 10 en matériau thermoplastique, par des moyens d'entraînement (non représentés ici). Considérée successivement dans le sens F d'avancement de la bande, l'installation comprend une station 14 de chauffage, une station 16 de thermoformage, une station 18 de remplissage des récipients 37 thermoformés et une station 20 de fermeture de ces récipients 37 par scellement, au travers de leurs ouvertures, d'une bande de fermeture 22.

Bien entendu, l'invention peut s'appliquer également au thermoformage de récipients dans un matériau thermoplastique se présentant sous une autre forme que celle d'une bande continue, par exemple sous la forme de plaquettes ou jeton individuels à partir de chacun desquels un récipient ou un groupe de récipients sont thermoformés.

La station de thermoformage 16 illustrée comprend deux blocs de moule 24, chacun des deux blocs de moule 24 étant muni d'une pluralité de chambres de thermoformage 28.

La station de thermoformage 16 comprend également un bloc de pistons 30 de thermoformage, déplaçables dans lesdites chambres de thermoformage 28, ainsi que des moyens pour introduire des banderoles de décor dans les chambres de thermoformage comprenant deux blocs 32 de chambres d'introduction 36 de banderoles de décor 38 orientés de préférence dans la direction d'avancement de la bande.

De manière préférentielle, les pistons 30 de thermoformage sont aptes à se déplacer uniquement selon une direction sensiblement verticale. Dans l'exemple représenté, chaque bloc de moule 24 est associé à un bloc d'introduction 32. Des bandelettes de décor 40 sont amenées, par des moyens d'amenée jusqu'au voisinage des chambres d'introduction 36. Des moyens non représentés ici permettent de découper des banderoles de décor 38 dans les bandelettes 40 et de les enrouler dans les chambres d'introduction 36. Ces moyens sont par exemple analogues à ceux que décrit le brevet FR 2 793 185. Ces banderoles de décor 38 présentent la forme d'un cylindre ouvert à ses extrémités. Des tiges d'introduction 42 sont prévues pour transférer les banderoles de décor 38 enroulées depuis les chambres d'introduction 36 vers les chambres de thermoformage 28, ce transfert étant effectué latéralement par rapport aux blocs de moule 24,26. Pour cela, chaque chambre de thermoformage 28 présente une ouverture 62 qui, dans cette position du bloc de moule 24, fait face à la chambre d'introduction 36 correspondante.

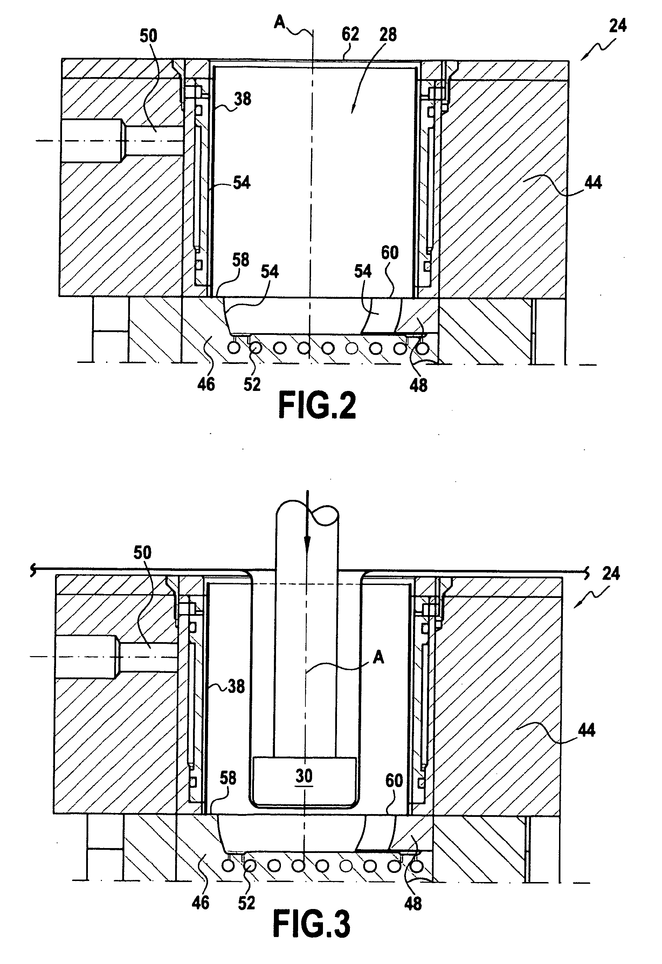

La figure 2 représente en détail une chambre de thermoformage 28 d'un bloc de moule 24 dans une position de réception de la banderole de décor 38, après l'introduction de la banderole de décor 38 à travers l'ouverture 62. Le bloc de moule comporte un corps principal 44 et deux pièces mobiles 46, 48. Tant le corps principal 44 que les pièces mobiles 46, 48 présentent des conduits d'évacuation d'air, respectivement 50 et 52, reliés à la surface interne 54 de la chambre de thermoformage 28. Dans la position initiale illustrée dans cette figure 2, les pièces mobiles 46, 48, situées au fond de la chambre de thermoformage 28, forment chacune un épaulement, respectivement 58 et 60, face à l'ouverture 62 de la chambre de thermoformage 28. Lors de son introduction dans la chambre de thermoformage 28 à travers l'ouverture 62, la banderole de décor 38 vient buter contre les épaulements 58, 60 au droit de l'ouverture 62, de telle manière qu'après cette introduction la banderole de décor 38 est retenue par ces épaulements 58,60.

La figure 3 illustre l'étape de formage de la bande thermoplastique 10 par le piston 30 de thermoformage. Dans cette étape, le piston 30 pénètre dans la chambre 28 en direction de l'axe A à travers l'ouverture 62, déformant et poussant le matériau thermoplastique de la bande 10, préalablement chauffée dans la station de chauffage 14, vers intérieur de la chambre de thermoformage 28. Pendant cette étape, les pièces mobiles 46, 48 restent dans la position de réception de la banderole de décor 38 avec les épaulements 58 et 60 qui continuent à retenir la banderole de décor 38, empêchant ainsi qu'elle soit repoussée vers le fond de la chambre de thermoformage 28.

Toutefois, avant l'étape de soufflage illustrée sur la figure 3, les pièces mobiles 46,48 sont déplacées de manière à escamoter les épaulements 58 et 60 dans la surface interne 54 de la chambre de thermoformage 28 pour passer à une position de thermoformage. Ainsi, dans cette position de thermoformage, les pièces mobiles 46, 48 sont en registre avec le corps principal 44, formant une surface interne 54 lisse contre laquelle le matériau thermoplastique de la bande 10 va être soufflé par un dispositif pneumatique de soufflage injectant de l'air à pression dans la cavité formée par le piston 30 dans le matériau thermoplastique. L'air attrapé entre ce matériau thermoplastique et la surface 54 s'échappant par les conduits d'évacuation 50, 52, le matériau thermoplastique de la bande 10 va être poussé par cette pression vers la surface 54 jusqu'à l'épouser avec précision, formant ainsi un récipient à l'extérieur sensiblement lisse et esthétiquement avantageux, avec une bonne intégration de la banderole de décor 38 dans cet extérieur. Après cette étape de soufflage, le récipient pourra être démoulé par défilement de la bande 10 et basculement simultané du bloc de moule 24 dans le sens de défilement.

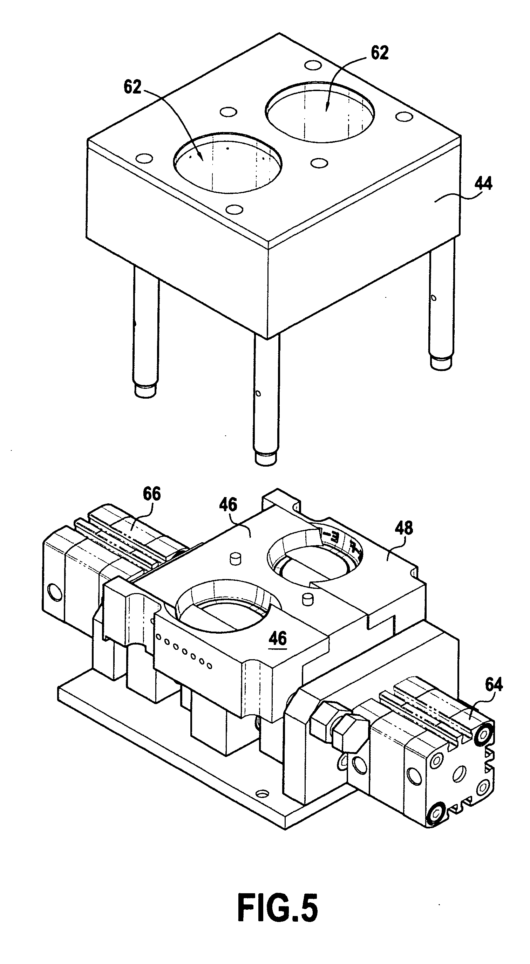

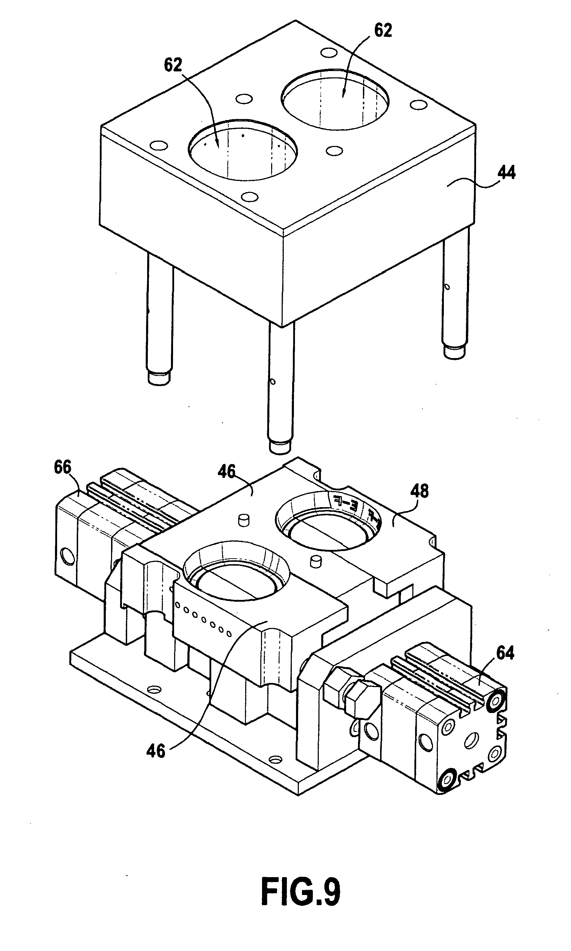

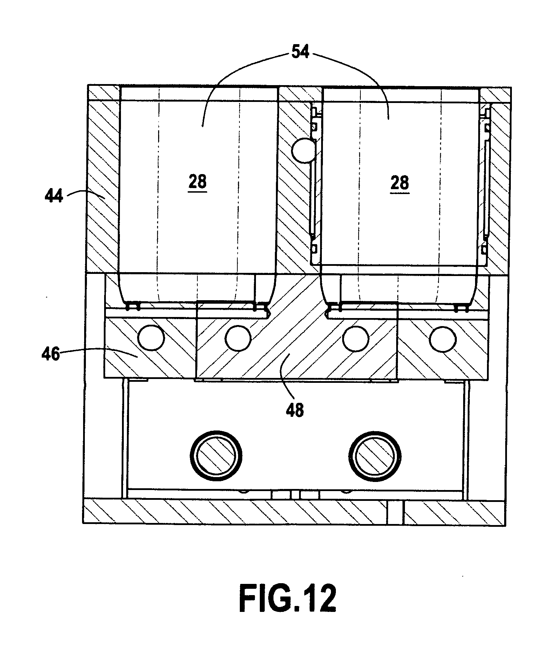

Pour une meilleure compréhension de l'invention, le bloc de moule 24, avec deux chambres de thermoformage 28, est illustré dans les figures 5-8 dans sa position de réception de banderoles de décor 38 dans chacune des chambres 28, et dans les figures 9-12 dans sa position de thermoformage. Dans la figure 5, le bloc de moule 24 est illustré en perspective éclatée. Ainsi, le corps principal 44 est illustré séparé des pièces mobiles 46, 48 et de leurs actionneurs respectifs 64, 66. On peut ainsi apprécier comment chacune des deux pièces mobiles 46, 48 comporte une partie de la surface interne du fond de chacune des deux chambres de thermoformage 28.

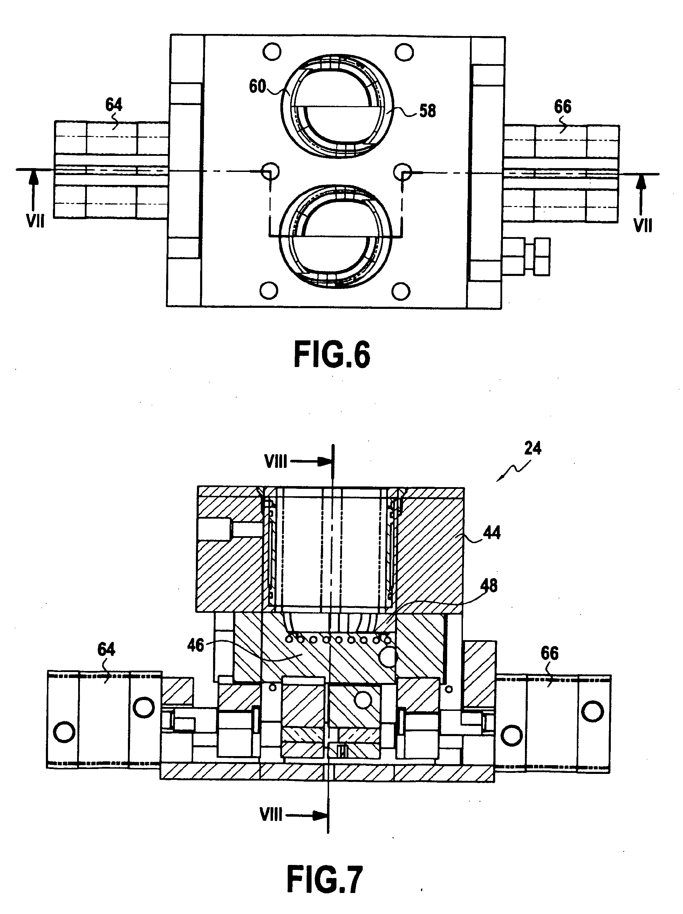

Dans la figure 6, les épaulements 58, 60 formés par les pièces mobiles 46, 48 dans chaque chambre de thermoformage 28 dans cette position de réception des banderoles de décor 38 sont visibles à travers l'ouverture 62 de chaque chambre 28.

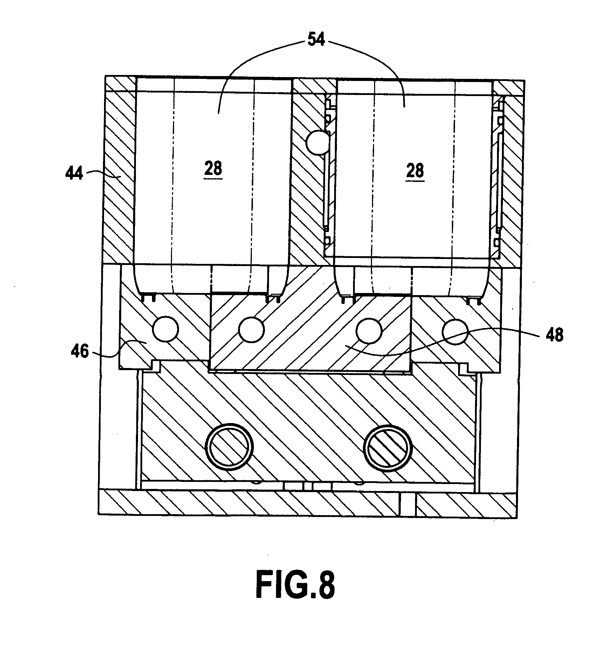

Dans les figures 7 et 8, on peut apprécier comment l'actionneur 64 est connecté à la pièce mobile 46 par une tige 68 pour déplacer cette première pièce mobile 46 dans une première direction sensiblement perpendiculaire aux axes 62 de pénétration des pistons 30 dans les chambres de thermoformage 28, tandis que l'actionneur 58 est connecté à la pièce mobile 48 par une tige pour déplacer cette deuxième pièce mobile 48 dans une deuxième direction sensiblement opposée à la première direction. Ainsi les actionneurs 64, 66 peuvent déplacer les pièces mobiles 46, 48 à partir de la position de réception des banderoles illustrée dans les figures 5 à 8, vers une position de thermoformage dans laquelle les pièces mobiles 46,48 s'alignent l'une à l'autre et avec le corps principal 44 du bloc de moule pour former une surface interne 54, sensiblement lisse, de chaque chambre de thermoformage 28. Cette position de thermoformage est illustrée sur les figures 9 à 12.

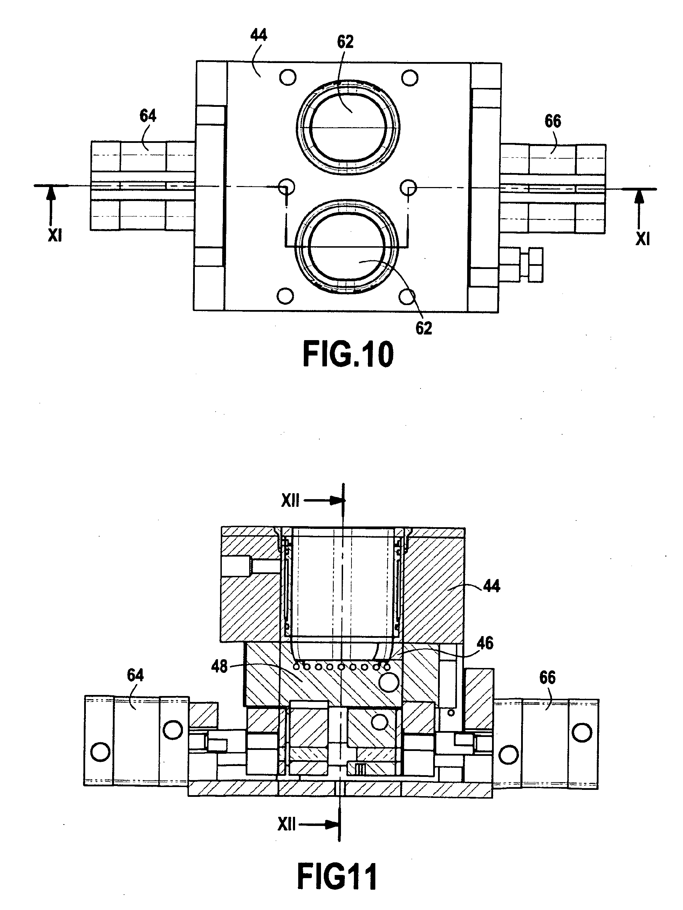

Sur la figure 9, on peut apprécier comment, dans cette position de thermoformage, les pièces mobiles 46, 48 se sont alignées mutuellement, pour former le fond de chacune des deux chambres de thermoformage 28. Sur la figure 10, on peut aussi apprécier comment maintenant, dans chaque chambre 28, les pièces mobiles 46, 48 sont en registre avec le corps principal 44 du bloc de moule 24, escamotant ainsi les épaulements 58, 60 dans la surface interne 54, désormais lisse, de chaque chambre 28. Ceci est aussi visible sur la figure 11, en comparaison avec la figure 7.

Le déplacement des pièces mobiles 46, 48 de la position de réception à la position de thermoformage est bien sûr réversible après le démoulage des récipients, de manière à rendre les chambres de thermoformage 28 disponibles pour l'introduction des banderoles de décor 38 suivantes.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. Par exemple, la station de thermoformage pourrait comporter un nombre différent de blocs de moule, et/ou chaque bloc de moule un nombre différent de chambres de thermoformage. Bien que l'invention ait été décrite en référence à une station de thermoformage à moule basculant, elle pourrait aussi s'appliquer à d'autres types d'appareils de thermoformage. Par conséquent, la description et les dessins doivent être considérés dans un sens illustratif plutôt que restrictif.

## Revendications

1. Procédé de fabrication de récipients (37) par thermoformage comportant les étapes suivantes :
introduction d'une banderole de décor (38) dans une chambre de thermoformage (28) d'un bloc de moule (24), en butée contre au moins un épaulement (58,60) initialement présent dans la chambre de thermoformage (28) dans une position de réception de la banderole de décor (38) ;
formage d'une préforme thermoplastique chaude par un piston (30) pénétrant dans la chambre de thermoformage (28) ; et
soufflage de la préforme contre une surface interne (54) de la chambre de thermoformage (28) ;
le procédé étant **caractérisé en ce que** ledit épaulement (58,60) est escamoté avant la fin de l'étape de soufflage.

2. Procédé de fabrication de récipients (37) par thermoformage suivant la revendication 1, dans lequel une surface interne est sensiblement lisse et libre d'épaulements en fin de soufflage.

3. Procédé de fabrication de récipients (37) par thermoformage suivant l'une quelconque des revendications 1 ou 2, dans lequel la banderole de décor (38) est introduite dans la chambre de thermoformage (28) et le piston pénètre dans la chambre de thermoformage (28) à travers une même ouverture (62) au droit de l'au moins un épaulement (58,60) dans sa position de réception de la banderole de décor (38).

4. Procédé de fabrication de récipients par thermoformage suivant l'une quelconque des revendications 1 à 3, dans lequel ledit épaulement (58,60) est escamoté par déplacement d'au moins une pièce mobile (46,48) comportant une partie de ladite surface interne (54) de la chambre de thermoformage (28).

5. Procédé de fabrication de récipients (37) par thermoformage suivant la revendication 4, dans lequel ladite pièce mobile (46,48) est déplacée dans une direction sensiblement transversale à un axe (A) de pénétration du piston (30) dans la chambre de thermoformage (28).

6. Procédé de fabrication de récipients (37) par thermoformage suivant une quelconque des revendications 4 ou 5, dans lequel ladite pièce mobile (46,48) forme au moins une partie du fond de la chambre de thermoformage (28).

7. Procédé de fabrication de récipients (37) par thermoformage suivant l'une quelconque des revendications 1 à 6, dans lequel, lors de ladite étape d'introduction, ladite banderole (38) est mise en butée contre au moins un premier et un deuxième épaulement (58,60) dans la chambre de thermoformage, ledit premier épaulement (58) étant escamoté avant la fin de l'étape de soufflage par déplacement d'une première pièce mobile (46) comportant une première partie de la surface interne (54) de la chambre de thermoformage (28) dans une première direction de déplacement, et ledit deuxième épaulement (60) étant escamoté avant la fin de l'étape de soufflage par déplacement d'une deuxième pièce mobile (48) comportant une deuxième partie de la surface interne (54) de la chambre de thermoformage (28) dans une deuxième direction sensiblement opposée à ladite première direction de déplacement.

8. Procédé de fabrication de récipients (37) par thermoformage suivant l'une quelconque des revendications 1 à 7, dans lequel le bloc de moule (24) comporte une pluralité de chambres de thermoformage (28).

9. Procédé de fabrication de récipients (37) par thermoformage suivant la revendication 8, dans lequel des épaulements (58,60) dans au moins une première et une deuxième desdites chambres de thermoformage (28) sont escamotés par déplacement d'une même pièce mobile (46,48) comportant une partie de la surface interne (54) de la première chambre de thermoformage (28) et une partie de la surface interne (54) de la deuxième chambre de thermoformage (28).

10. Installation pour la fabrication de récipients (37) par thermoformage comportant :
un bloc de moule (24) présentant au moins une chambre de thermoformage (28) apte à recevoir une préforme thermoplastique, avec une ouverture (62) et au moins un épaulement (58,60) face à ladite ouverture pour faire butée à une banderole de décor (38) introduite dans la chambre de thermoformage ;
un dispositif de chauffage (14) de la préforme thermoplastique ;
un piston de formage (30) de la préforme thermoplastique apte à pénétrer, par l'ouverture (62), dans la chambre de thermoformage (28) ; et
un dispositif pneumatique de soufflage de la préforme thermoplastique contre une surface interne (54) de l'au moins une chambre de thermoformage (28) ;
l'installation de thermoformage étant **caractérisée en ce que** ledit épaulement (58,60) est escamotable.

11. Installation de thermoformage suivant la revendication 10, dans laquelle une surface interne de la chambre de thermoformage peut être rendue sensiblement lisse et libre d'épaulements en fin de soufflage par escamotage dudit épaulement escamotable avant la fin de soufflage.

12. Installation de thermoformage suivant l'une quelconque des revendication 11 ou 12, dans laquelle ledit au moins un épaulement escamotable (58,60) est formé par au moins une pièce mobile (46,48) comportant une partie de ladite surface interne (54) de la chambre de thermoformage (28).

13. Installation de thermoformage suivant la revendication 12, dans laquelle l'au moins une pièce mobile (46,48) est apte à se déplacer, sensiblement transversalement à un axe (A) de pénétration du piston (30) dans la chambre de thermoformage (28), entre une première position dans laquelle ladite pièce mobile (46,48) présente ledit épaulement (58,60) face à ladite ouverture (62) et une deuxième position dans laquelle ledit épaulement (58,60) est escamoté.

14. Installation de thermoformage suivant l'une quelconque des revendications 11 à 13, comportant une première et une deuxième pièce mobile (46,48), lesdites première et deuxième pièces mobiles (46,48) comportant chacune une partie de ladite surface interne (54) de la chambre de thermoformage (28), et étant déplaçables dans des directions sensiblement opposées l'une à l'autre pour escamoter, respectivement, au moins un premier et au moins un deuxième épaulement (58,60) de la chambre de thermoformage (28).

15. Installation de thermoformage suivant une quelconque des revendications 11 à 14, dans laquelle le bloc de moule (24) comporte une pluralité de chambres de thermoformage (28).

16. Installation de thermoformage suivant la revendication 15, dans laquelle le moule comporte une pièce mobile (46,48) comportant une partie de la surface interne (54) d'une première chambre de thermoformage (28) et une partie de la surface interne (54) d'une deuxième chambre de thermoformage (28), et formant des épaulements escamotables (58,60) tant dans la première comme dans la deuxième chambre de thermoformage (28).

## Patentansprüche

1. Verfahren zur Herstellung von Behältern (37) durch Thermoformen, umfassend die folgenden Schritte:
Einführen einer Zierbanderole (38) in eine Thermoformkammer (28) eines Formblocks (24), in Anschlag an wenigstens eine Schulter (58, 60), die anfangs in der Thermoformkammer (28) in einer Position zur Aufnahme der Zierbanderole (38) vorhanden ist,
Formen eines heißen thermoplastischen Vorformlings durch einen Kolben (30), der in die Thermoformkammer (28) eindringt, und
Blasen des Vorformlings gegen eine Innenfläche (54) der Thermoformkammer (28),
wobei das Verfahren **dadurch gekennzeichnet ist, dass** die Schulter (58, 60) vor dem Ende des Blasschrittes eingefahren wird.

2. Verfahren zur Herstellung von Behältern (37) durch Thermoformen nach Anspruch 1, bei dem eine Innenfläche am Ende des Blasens im Wesentlichen glatt und frei von Schultern ist.

3. Verfahren zur Herstellung von Behältern (37) durch Thermoformen nach einem der Ansprüche 1 oder 2, bei dem durch eine gleiche Öffnung (62) gegenüber der wenigstens einen Schulter (58, 60) in ihrer Position zur Aufnahme der Zierbanderole (38) die Zierbanderole (38) in die Thermoformkammer (28) eingeführt wird und der Kolben in die Thermoformkammer (28) eindringt.

4. Verfahren zur Herstellung von Behältern durch Thermoformen nach einem der Ansprüche 1 bis 3, bei dem die Schulter (58, 60) durch Bewegen wenigstens eines beweglichen Teils (46, 48), das einen Teil der Innenfläche (54) der Thermoformkammer (28) umfasst, eingefahren wird.

5. Verfahren zur Herstellung von Behältern (37) durch Thermoformen nach Anspruch 4, bei dem das bewegliche Teil (46, 48) in eine Richtung bewegt wird, die zu einer Achse (A) des Eindringens des Kolbens (30) in die Thermoformkammer (28) im Wesentlichen quer verläuft.

6. Verfahren zur Herstellung von Behältern (37) durch Thermoformen nach einem der Ansprüche 4 oder 5, bei dem das bewegliche Teil (46, 48) wenigstens einen Teil des Bodens der Thermoformkammer (28) bildet.

7. Verfahren zur Herstellung von Behältern (37) durch Thermoformen nach einem der Ansprüche 1 bis 6, bei dem während des Einführschrittes die Banderole (38) an wenigstens einer ersten und einer zweiten Schulter (58, 60) in der Thermoformkammer in Anschlag gebracht wird, wobei die erste Schulter (58) vor dem Ende des Blasschrittes durch Bewegen eines ersten beweglichen Teils (46), das einen ersten Teil der Innenfläche (54) der Thermoformkammer (28) umfasst, in eine erste Bewegungsrichtung eingefahren wird und wobei die zweite Schulter (60) vor dem Ende des Blasschrittes durch Bewegen eines zweiten beweglichen Teils (48), das einen zweiten Teil der Innenfläche (54) der Thermoformkammer (28) umfasst, in eine zweite Richtung, die zu der ersten Bewegungsrichtung im Wesentlichen entgegengesetzt ist, eingefahren wird.

8. Verfahren zur Herstellung von Behältern (37) durch Thermoformen nach einem der Ansprüche 1 bis 7, bei dem der Formblock (24) eine Vielzahl von Thermoformkammern (28) umfasst.

9. Verfahren zur Herstellung von Behältern (37) durch Thermoformen nach Anspruch 8, bei dem Schultern (58, 60) in wenigstens einer ersten und einer zweiten der Thermoformkammern (28) durch Bewegen eines gleichen beweglichen Teils (46, 48), das einen Teil der Innenfläche (54) der ersten Thermoformkammer (28) und einen Teil der Innenfläche (54) der zweiten Thermoformkammer (28) umfasst, eingefahren werden.

10. Anlage für die Herstellung von Behältern (37) durch Thermoformen, umfassend:
einen Formblock (24), aufweisend wenigstens eine Thermoformkammer (28), welche geeignet ist, einen thermoplastischen Vorformling aufzunehmen, mit einer Öffnung (62) und wenigstens einer Schulter (58, 60) gegenüber der Öffnung, um einen Anschlag für eine in die Thermoformkammer eingeführte Zierbanderole (38) zu bilden,
eine Vorrichtung zum Erhitzen (14) des thermoplastischen Vorformlings,
einen Kolben zum Formen (30) des thermoplastischen Vorformlings, der geeignet ist, über die Öffnung (62) in die Thermoformkammer (28) einzudringen, und
eine pneumatische Vorrichtung zum Blasen des thermoplastischen Vorformlings gegen eine Innenfläche (54) der wenigstens einen Thermoformkammer (28),
wobei die Thermoformanlage **dadurch gekennzeichnet ist, dass** die Schulter (58, 60) einfahrbar ist.

11. Thermoformanlage nach Anspruch 10, bei der durch Einfahren der einfahrbaren Schulter vor dem Ende des Blasens eine Innenfläche der Thermoformkammer am Ende des Blasens im Wesentlichen glatt und frei von Schultern gemacht werden kann.

12. Thermoformanlage nach einem der Ansprüche 11 oder 12, bei der die wenigstens eine einfahrbare Schulter (58, 60) durch wenigstens ein bewegliches Teil (46, 48), das einen Teil der Innenfläche (54) der Thermoformkammer (28) umfasst, gebildet ist.

13. Thermoformanlage nach Anspruch 12, bei der das wenigstens eine bewegliche Teil (46, 48) geeignet ist, sich im Wesentlichen quer zu einer Achse (A) des Eindringens des Kolbens (30) in die Thermoformkammer (28), zwischen einer ersten Position, in der das bewegliche Teil (46, 48) die Schulter (58, 60) gegenüber der Öffnung (62) aufweist, und einer zweiten Position, in der die Schulter (58, 60) eingefahren ist, zu bewegen.

14. Thermoformanlage nach einem der Ansprüche 11 bis 13, umfassend ein erstes und ein zweites bewegliches Teil (46, 48), wobei das erste und das zweite bewegliche Teil (46, 48) jeweils einen Teil der Innenfläche (54) der Thermoformkammer (28) umfassen und in im Wesentlichen zueinander entgegengesetzten Richtungen beweglich sind, um wenigstens eine erste bzw. wenigstens eine zweite Schulter (58, 60) der Thermoformkammer (28) einzufahren.

15. Thermoformanlage nach einem der Ansprüche 11 bis 14, bei der der Formblock (24) eine Vielzahl von Thermoformkammern (28) umfasst.

16. Thermoformanlage nach Anspruch 15, bei der die Form ein bewegliches Teil (46, 48) umfasst, das einen Teil der Innenfläche (54) einer ersten Thermoformkammer (28) und einen Teil der Innenfläche (54) einer zweiten Thermoformkammer (28) umfasst und das einfahrbare Schultern (58, 60) sowohl in der ersten als auch in der zweiten Thermoformkammer (28) bildet.

## Claims

1. A method for manufacturing containers (37) by thermoforming including the following steps:
introducing a decorative banner (38) in a thermoforming chamber (28) of a mold block (24), in abutment against at least one shoulder (58, 60) initially present in the thermoforming chamber (28) in a position for receiving the decorative banner (38);
forming a hot thermoplastic preform with a piston (30) penetrating into the thermoforming chamber (28); and
blowing the preform against an internal surface (54) of the thermoforming chamber (28);
the method being **characterized in that** said shoulder (58, 60) is retracted before the end of the blowing step.

2. The method for manufacturing containers (37) by thermoforming according to claim 1, wherein an internal surface is substantially smooth and free of shoulders at the end of blowing.

3. The method for manufacturing containers (37) by thermoforming according to any of claims 1 or 2, wherein the decorative banner (38) is introduced into the thermoforming chamber (28) and the piston penetrates into the thermoforming chamber (28) through a same aperture (62) in front of said at least one shoulder (58, 60) in its position for receiving the decorative banner (38).

4. The method for manufacturing containers by thermoforming according to any of claims 1 to 3, wherein said shoulder (58, 60) is retracted by displacing at least one movable part (46, 48) including a portion of said internal surface (54) of the thermoforming chamber (28).

5. The method for manufacturing containers (37) by thermoforming according to claim 4, wherein said movable part (46, 48) is displaced in a direction substantially transverse to a penetration axis (A) of the piston (30) in the thermoforming chamber (28).

6. The method for manufacturing containers (37) by thermoforming according to any of claims 4 or 5, wherein said movable part (46, 48) forms at least one portion of the bottom of the thermoforming chamber (28).

7. The method for manufacturing containers (37) by thermoforming according to any of claims 1 to 6, wherein, during said introduction step, said banner (38) is set in abutment against one first and one second shoulder (58, 60) in the thermoforming chamber, said first shoulder (58) being retracted before the end of the blowing step by displacing a first movable part (46) including a first portion of the internal surface (54) of the thermoforming chamber (28) in a first displacement direction, and said second shoulder (60) being retracted before the end of the blowing step by displacing a second movable part (48) including a second portion of the internal surface (54) of the thermoforming chamber (28) in a second direction substantially opposite to said first displacement direction.

8. The method for manufacturing containers (37) by thermoforming according to any of claims 1 to 7, wherein the mold block (24) includes a plurality of thermoforming chambers (28).

9. The method for manufacturing containers (37) by thermoforming according to claim 8, wherein the shoulders (58, 60) in at least one first and one second of said thermoforming chambers (28) are retracted by displacing a same movable part (46, 48) including a portion of the internal surface (54) of the first thermoforming chamber (28) and a portion of the internal surface (54) of the second thermoforming chamber (28).

10. An installation for manufacturing containers (37) by thermoforming including:
a mold block (24) having at least one thermoforming chamber (28) capable of receiving a thermoplastic preform, with an aperture (62) and at least one shoulder (58, 60) facing said aperture for abutting upon a decorative banner (38) introduced into the thermoforming chamber;
a device (14) for heating the thermoplastic preform;
a piston (30) for forming the thermoplastic preform capable of penetrating, through the aperture (62), into the thermoforming chamber (28); and
a pneumatic device for blowing the thermoplastic preform against an internal surface (54) of said at least one thermoforming chamber (28);
the thermoforming installation being **characterized in that** said shoulder (58, 60) is retractable.

11. The thermoforming installation according to claim 10, wherein an internal surface of the thermoforming chamber may be made substantially smooth and free of shoulders at the end of blowing by retracting said retractable shoulder before the end of blowing.

12. The thermoforming installation according to any of claims 11 or 12, wherein said at least one retractable shoulder (58, 60) is formed by at least one movable part (46, 48) including a portion of said internal surface (54) of the thermoforming chamber (28).

13. The thermoforming installation according to claim 12, wherein said at least one movable part (46, 48) is able to move, substantially transversely to a penetration axis (A) of the piston (30) in the thermoforming chamber (28), between a first position in which said movable part (46, 48) has said shoulder (58, 60) facing said aperture (62) and a second position in which said shoulder (58, 60) is retracted.

14. The thermoforming installation according to any of claims 11 to 13, including a first and a second movable part (46, 48), said first and second movable parts (46, 48) each including a portion of said internal surface (54) of the thermoforming chamber (28), and being movable in directions substantially opposite to each other for respectively retracting at least one first and at least one second shoulder (58, 60) of the thermoforming chamber (28).

15. The thermoforming installation according to any of claims 11 to 14, wherein the mold block (24) includes a plurality of thermoforming chambers (28).

16. The thermoforming installation according to claim 15, wherein the mold includes a movable part (46, 48) including a portion of the internal surface (54) of a first thermoforming chamber (28) and a portion of the internal surface (54) of a second thermoforming chamber (28), and forming retractable shoulders (58, 60) both in the first and in the second thermoforming chamber (28).
